# EUROPEAN PATENT SPECIFICATION

(11) **EP 3 865 790 B1**
(45) Date of publication and mention of the grant of the patent: **25.02.2026**
(21) Application number: 21156725.0
(22) Date of filing: 12.02.2021
(51) Int. Cl.: F25B 13/00

(54) **HEAT EXCHANGER WITH A PLURALITY OF CONDUITS**
WÄRMETAUSCHER MIT EINER VIELZAHL VON LEITUNGEN
ÉCHANGEUR DE CHALEUR AVEC UNE PLURALITÉ DE CONDUITES

(30) Priority: 13.02.2020 FI 20205152
(43) Date of publication of application: 18.08.2021
(73) Proprietor: Koja Oy, 33900 Tampere (FI)
(72) Inventor: TIMLIN, Taneli, 33720 Tampere (FI)
(74) Representative: Berggren Oy

(56) References cited:
- EP-A1- 2 711 652
- JP-A- H03 158 666
- KR-B1- 102 041 473
- US-A- 4 182 133

## Description

### Technical field

The invention relates to heat exchangers. The invention further relates to methods for changing an active heat exchanging area in heat exchangers. The invention further relates to heat exchanging systems comprising a heat exchanger.

### Background

A typical heat exchanger comprises at least one or more duct, one fluid inlet conduit and one fluid outlet conduit. The inlet conduit is configured to direct a stream of heat transfer fluid into the one or more duct. The one or more duct is configured to circulate the heat transfer fluid. The outlet conduit is configured to direct said stream of heat transfer fluid out from the heat exchanger. Said typical heat exchanger is configured to transport heat between an incoming medium, e.g. fluid or gas, such as air, and the heat transfer fluid.

In a heating situation, heat contained in the heat transfer fluid is transferred into the one or more duct, and further into an incoming medium. In a cooling situation, heat is transferred from incoming medium flowing through the heat exchanger into the one or more duct of the heat exchanger, and further into the heat transfer fluid circulating in the one or more duct.

Heat exchangers may be used in various applications, such as ventilation, heating, air conditioning, power stations, chemical plants, and sewage treatment, as well as combustion engines and heat sinks.

In ventilation systems, heat exchangers are often used to heat the incoming air entering an indoor space. Energy efficiency of the system may be improved by extracting heat from exhaust air with the use of heat exchangers and reusing the heat for heating the incoming air. Especially in cold climates, the improvement in energy efficiency may be considerable. In cold environments, however, heat exchangers in such a ventilation system are prone to frost buildup. Cold incoming air may cause frost accumulation on the heat exchanger surface, or even freezing of the heat transfer fluid.

The accumulated frost may be removed from the heat exchanger surface in a defrost cycle. During such a defrost cycle, heat transfer capacity of a heat exchanger needs to be controlled. Traditionally, heat transfer capacity of the heat exchanger is restricted either by restricting the fluid flow rate or by controlling the fluid temperature. Restricting the fluid flow rate may, however, cause a risk of fluid freezing, or it may lead to a laminar flow, making controlling the fluid temperature difficult. In order to minimize the risk of fluid freezing, more concentrated heat transfer fluids have been used. The more concentrated heat transfer fluid may impose a health risk, an environmental risk as well as an economical risk. Therefore, there is a need for a solution to control the heat transfer capacity of a heat exchanger that reduces the need for concentrated heat transfer fluids, or that allows to use less concentrated heat transfer fluids.

The patent KR 102041473 B1 relates to a heat exchanger with adjustable heat exchange capability, and an apparatus for performing heat exchange with different heat exchange capabilities. Depending on the required heat exchange capability, heat exchange can be performed with two or more different heat exchange capabilities within one heat exchanger, and the heat exchange capability can be controlled to a desired level. This is accomplished by including an intermediate manifold in a conduit heat unit communicating an outlet to an inlet of a neighboring conduit heat unit and selectively recovering a second heat exchange medium from the conduit heat unit.

The patent application EP 2 711 652 A1 discloses an integral air conditioning system for heating and cooling. The system comprises an air conditioner, a cooler, an outdoor heat exchanger, a blower fan, and a branch part. The air conditioner comprises a first compressor and a first indoor heat exchanger, the air conditioner forming a first refrigeration cycle. The cooler comprises a second compressor, a second indoor heat exchanger and a sensing part being adapted to detect a pressure and/or temperature of a refrigerant circulating in the second refrigeration cycle, the cooler forming a second refrigeration cycle. The outdoor heat exchanger comprises a first heat exchange part being part of the first refrigeration cycle and a second heat exchange part being part of the second refrigeration cycle. The blower fan is for blowing outdoor air into the first heat exchange part and the second heat exchange part. The branch part comprises a plurality of branches for dividing the refrigerant to be introduced into the second heat exchange part.

The patent application JP 4-3158666 A discloses an evaporator provided with an inlet header and an outlet header at both ends of a flat tube, providing an intermediate header between both the ends, and providing transfer valves at the other ends of main and sub outlet tubes. When a main outlet tube is opened by a transfer valve, refrigerant is fed from an inlet header to an outlet header, fed out of an outlet chamber through the tube. When a sub outlet tube is opened, the refrigerant is fed from the header to an intermediate header, and fed out of the header through the tube. Accordingly, the length of refrigerant passage can be replaced by switching the valve.

### Summary

The drawbacks associated with present heat exchangers may be overcome by controlling heat transfer capacity of the heat exchanger by changing an active heat exchanging area within the heat exchanger. The change in the active heat exchanging area may be achieved by supplying the heat exchanger with an intermediate conduit in addition to the inlet and outlet conduits. By selecting certain conduits to be used to direct the stream of heat transfer fluid within the heat exchanger, it is possible to control heat transfer capacity of the heat exchanger without modifying the fluid flow rate or the temperature of the fluid entering the heat exchanger. Furthermore, less concentrated heat transfer fluids may be used, because less concentrated heat transfer fluids transfer heat more efficiently than fluids with a very high concentration. The use of less concentrated heat transfer fluids may lead to improved energy- and cost-efficiency.

An object of the present invention is to minimise or possibly even eliminate the disadvantages existing in the prior art.

An object of the present invention is to provide an improved heat exchanger with an easily controllable heat transfer capacity. A further object of the present invention is to provide an improved method for controlling the heat transfer capacity of a heat exchanger.

The present invention is mainly characterized by a heat exchanger as defined by claim 1.

Furthermore, the present invention is characterized by a method as defined by claim 4.

The present invention is further characterized by a heat exchanging system as defined by claim 5.

The inventors have surprisingly found that the heat transfer capacity of a heat exchanger may be controlled by adjusting flow rate of the heat transfer fluid through inlet, outlet and intermediate conduits in a heat exchanger. Adding one or more intermediate conduit to the heat exchanger structure allows to control the heat transfer capacity by changing the active heat changing area of the heat exchanger. Upon inactivating a section of the heat exchanging area, a smaller amount of heat is transferred from the heat transfer fluid into the incoming air. Thus, the temperature of the heat transfer fluid increases. The inventors have surprisingly found that a heat exchanger may be defrosted using the additional heat contained in the heat transfer fluid.

Some advantageous embodiments of the invention are presented in the dependent claims.

The exemplary embodiments presented in this text and their advantages relate by applicable parts to all aspects of the invention, even though this is not always separately mentioned.

### Brief description of the drawings

- Figure 1a: presents a simplified schematic of a heat exchanger according to an embodiment of the invention,
- Figure 1b: presents a simplified schematic of a heat exchanger according to an embodiment of the invention,
- Figure 2a: presents a simplified schematic of an exemplary air handling apparatus comprising a heat exchanger according to an embodiment of the invention,
- Figure 2b: presents a simplified flowchart schematic of an exemplary air handling apparatus comprising a heat exchanger according to an embodiment of the invention.

### Detailed description

The following reference numerals will be referred to in this application:
- 10: Heat exchanger
- 11: Duct
- 12: Lamellae
- 13: Fluid inlet/ outlet conduits
- 13a: Inlet conduit
- 13b: Intermediate conduit
- 13c: Outlet conduit
- 14: Incoming air
- 20: Air handling apparatus
- 21: Room
- 22: Entrance heat exchanger
- 23: Exit heat exchanger
- 24: Piping
- 25a: Inlet conduit
- 25b: Intermediate conduit
- 25c: Outlet conduit
- 26: Incoming air
- 27: Exiting air
- 28: Pump
- 29: Control valve

There is provided a heat exchanger comprising at least one or more duct configured to circulate heat transfer fluid, one or more inlet conduit, one or more outlet conduit and one or more intermediate conduit. Said one or more inlet conduit, one or more intermediate conduit and one or more outlet conduit may comprise e.g. manifolds. Heat transfer capacity of the heat exchanger may be controlled by changing an active heat exchanging area by controlling flow rate of the heat transfer fluid through at least one of said one or more inlet conduit, one or more outlet conduit and one or more intermediate conduit. The heat exchanger may transfer heat between a stream of an incoming medium, e.g. fluid or gas, such as air, and said heat transfer fluid circulating in said one or more duct. The heat transfer fluid may be a liquid, i.e., the heat exchanger may be a liquid-air heat exchanger. The heat exchanger may further comprise means for assisting heat transfer between the incoming medium and the one or more duct, e.g. lamellae, fins, or needles, or the like.

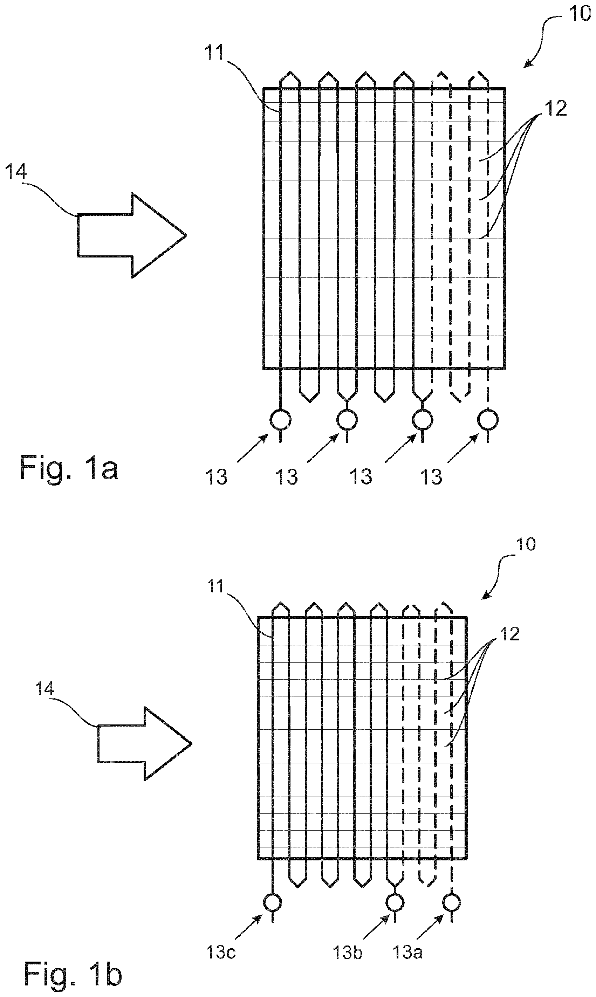

Figure 1a presents a heat exchanger 10 in a simplified manner. The heat exchanger 10 may be a fluid-air heat exchanger. The heat exchanger 10 may comprise at least one or more duct 11, a plurality of fluid inlet and outlet conduits 13, and a means for transferring incoming air 14 through the heat exchanger. A stream of heat transfer fluid may be directed into the heat exchanger through one of the conduits 13. Having circulated inside the heat exchanger, the fluid may leave the heat exchanger through one of the conduits 13. The heat exchanger 10 may further comprise means for assisting heat transfer between the incoming air and the one or more duct, e.g. lamellae 12.

In an embodiment, the heat exchanger may function in a heating mode, and heat is transferred from the heat transfer fluid into the one or more duct 11, and further into the incoming air 14 through the lamellae 12. In an embodiment, the heat exchanger may function in a cooling mode, and heat is transferred from the incoming air 14 into the lamellae 12 and further into the heat transfer fluid circulating in the one or more duct 11.

In certain conditions, heat transfer capacity of the heat exchanger may temporarily need to be decreased. According to an embodiment, controlling the heat transfer capacity of the heat exchanger may be achieved by changing an active heat exchanging area by selecting which inlet and outlet conduits 13 are used.

Figure 1b presents a heat exchanger 10 that may be a fluid-air heat exchanger, comprising at least one or more duct 11, lamellae 12, an inlet conduit 13a, an intermediate conduit 13b, and an outlet conduit 13c. In normal operation, the heat transfer fluid may be directed into the heat exchanger through the inlet conduit 13a. The entire area of the heat exchanger may thereby be used for the heat exchanging action. In a heat transfer capacity restriction situation, flow rates in the inlet conduit and intermediate conduit may be controlled such that the heat transfer fluid may enter the heat exchanger partially, primarily or entirely through the intermediate conduit 13b. In this situation, flow rate of the heat transfer fluid in the one or more duct 11 may be considerably smaller between the inlet conduit 13a and the intermediate conduit 13b than between the intermediate conduit 13b and the outlet conduit 13c. Therefore, contact area between the incoming air 14 and the active part of the heat exchanger may be decreased compared to normal operation cycle, leading to smaller amount of heat transferred from the heat transfer fluid into the incoming air 14, increasing the temperature of the fluid. The heat transfer capacity restriction may need to be optimized such that the heat transfer fluid between the inlet conduit and the intermediate conduit, having a small flow rate, will not freeze e.g. in case of very cold incoming air.

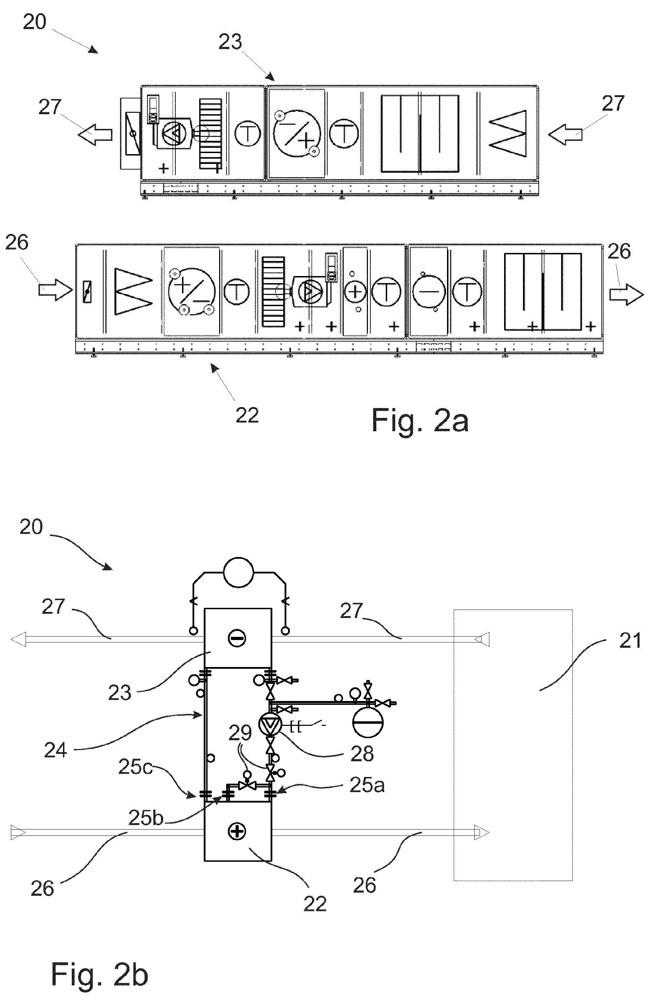

Figure 2a presents a simplified, schematic view of an air handling apparatus. Incoming air 26 passes through an entrance heat exchanger 22, and exhaust air 27 passes through an exit heat exchanger 23. Figure 2b presents a simplified, schematic flowchart of an air handling apparatus according to an embodiment of the invention. The air handling apparatus 20 is used to supply fresh air into a room 21. The air handling apparatus 20 comprises at least an entrance heat exchanger 22, an exit heat exchanger 23, piping 24, a pump 28 configured to circulate heat transfer fluid between the entrance heat exchanger 22 and exit heat exchanger 23, and means for controlling flow rate of the heat transfer fluid. The means for controlling flow rate of the heat transfer fluid may comprise e.g. an auxiliary pump or one or more control valves 29. The entrance heat exchanger 22 may comprise an inlet conduit 25a, an intermediate conduit 25b, and an outlet conduit 25c. Incoming air 26 may be heated by using the entrance heat exchanger 22. Heat may be extracted from exiting air 27 by using the exit heat exchanger 23.

In an embodiment, the air handling apparatus 20 may be used to extract heat from exhaust air 27 exiting a room 21. Heat transfer fluid may circulate through an exit heat exchanger 23, and heat may be transferred from the exhaust air 27 into the heat transfer fluid circulating in the exit heat exchanger 23. In addition, moisture contained in the exhaust air 27 may condense on the surface of the exit heat exchanger 23. In certain circumstances, e.g. in case of very cold outside air, temperature of the heat transfer fluid cooled by incoming air 26 may approach the outside air temperature. If the heat transfer fluid is very cold when entering the exit heat exchanger 23, moisture condensed on the surface of the exit heat exchanger 23 may freeze. The condensed moisture and frost may be removed by restricting heat transfer capacity of the entrance heat exchanger 22.

In an embodiment, the air handling apparatus 20 may be used to control temperature of incoming air 26 at the entrance heat exchanger 22 before the air is supplied into the room 21. Temperature of the incoming air 26 may be controlled by changing heat transfer capacity of the entrance heat exchanger 22 by changing an active heat exchanging area by controlling flow rate of the heat transfer fluid through at least one of said inlet conduit 25a, intermediate conduit 25b and outlet conduit 25c.

In normal operation, the heat transfer fluid may be directed into the entrance heat exchanger 22 through the first inlet conduit 25a. The heat exchanging operation may then take place throughout the entire area of the entrance heat exchanger 22. In a heat transfer capacity restriction situation, e.g. during a defrost cycle, flow rates of the heat transfer fluid through the inlet conduit and intermediate conduit may be controlled such that the fluid may be directed into the entrance heat exchanger 22 partially, primarily or entirely through the intermediate conduit 25b. Therefore, contact area between the incoming air 26 and the active area of the entrance heat exchanger 22 may be decreased compared to normal operation cycle. This may lead to a decrease in the amount of heat transferred from the heat transfer fluid into the incoming air 26, increasing the temperature of the fluid. The higher-temperature heat transfer fluid may remove any condensed moisture or frost from the surface of the exit heat exchanger 23. Once the defrosting cycle is completed, the system may be switched back to normal operation.

The heat transfer capacity restriction cycle may need to be optimized such that the heat transfer fluid between the inlet conduit and the intermediate conduit, having a small flow rate, will not freeze. In other words, the active area of the entrance heat exchanger needs to be large enough throughout the entire heat transfer capacity restriction cycle, such that by the time the incoming air reaches the inactive part of the entrance heat exchanger, the temperature of the incoming air is increased above the freezing temperature of the heat exchanger fluid between the inlet conduit and the intermediate conduit. Therefore, risk of freezing the heat transfer fluid may be minimized.

## Claims

1. An air handling apparatus (20) comprising an entrance heat exchanger (22) and an exit heat exchanger (23), wherein the entrance heat exchanger (22) and the exit heat exchanger (23) are fluid-air heat exchangers comprising at least one or more duct (11) configured to circulate heat transfer fluid, one or more inlet conduit (13a, 25a), one or more outlet conduit (13c, 25c) and one or more intermediate conduit (13b, 25b), means (29) for controlling flow rate of the heat transfer fluid through at least one of said one or more inlet conduit (13a, 25a), one or more outlet conduit (13c, 25c) and one or more intermediate conduit (13b, 25b), and means for transferring incoming air (14) through the entrance heat exchanger (22), wherein incoming air (14) is configured to enter the entrance heat exchanger (22) from the outlet conduit (13c) side, wherein the air handling apparatus (20) is configured to restrict heat transfer capacity of the entrance heat exchanger (22) during a defrost cycle of the air handling apparatus (20) by entering the heat transfer fluid via the intermediate conduit (25b) of the entrance heat exchanger (22) and exiting the heat transfer fluid via the outlet conduit (25c) of the entrance heat exchanger (22) to decrease the amount of heat transferred from the heat transfer fluid into the incoming air (26).

2. The heat exchanger according to claim 1, wherein said means for controlling said flow rate comprises a control valve (29).

3. The heat exchanger according to claim 1 or 2, wherein said means for controlling said flow rate comprises a pump (28).

4. A method for controlling heat transfer capacity of the air handling apparatus (20) according to any of the preceding claims 1 to 3, wherein the method comprises:
- entering incoming air (14) to the entrance heat exchanger (22) from the outlet conduit (13c, 25c) side,
- circulating the same heat transfer fluid via both the at least one entrance heat exchanger (22) and the at least one exit heat exchanger (23),
- transferring heat from the exhaust air (27) into the heat transfer fluid by the at least one exit heat exchanger (23);
- transferring heat from the heat transfer fluid to the incoming air (26) by the at least one entrance heat exchanger (22);
wherein the method comprises:
- performing a defrost cycle to remove moisture condensed on a surface of the exit heat exchanger (23)
wherein the defrost cycle comprises:
- decreasing an active heat exchanging area of the at least one entrance heat exchanger (22) by entering the heat transfer fluid via the intermediate conduit (25b) of the entrance heat exchanger (22) and exiting the heat transfer fluid via the outlet conduit (25c) of the entrance heat exchanger (22) to decrease the amount of heat transferred from the heat transfer fluid into the incoming air (26).

5. A heat exchanging system (20) comprising the air handling apparatus according to claim 1, piping, and a pump (28) configured to circulate heat transfer fluid via both the at least one entrance heat exchanger (22) and the at least one exit heat exchanger (23), wherein the heat exchanging system (20) is configured to perform a defrost cycle to remove moisture condensed on a surface of the exit heat exchanger (23) by decreasing an active heat exchanging area of the at least one entrance heat exchanger (22) by entering the heat transfer fluid via the intermediate conduit (25b) of the entrance heat exchanger (22) and exiting the heat transfer fluid via the outlet conduit (25c) of the entrance heat exchanger (22) to decrease the amount of heat transferred from the heat transfer fluid into the incoming air (26).

6. The heat exchanging system according to claim 5, wherein the heat exchanging system is configured to be utilized in a ventilation system.

## Patentansprüche

1. Luftbehandlungsgerät (20), umfassend einen Eingangswärmetauscher (22) und einen Ausgangswärmetauscher (23), wobei der Eingangswärmetauscher (22) und der Ausgangswärmetauscher (23) Fluid-Luft-Wärmetauscher sind, die mindestens eine oder mehrere Leitungen (11) umfassen, die konfiguriert sind, um Wärmeübertragungsfluid zu zirkulieren, eine oder mehrere Einlassleitungen (13a, 25a), eine oder mehrere Auslassleitungen (13c, 25c) und eine oder mehrere Zwischenleitungen (13b, 25b), Mittel (29) zum Steuern der Durchflussrate des Wärmeübertragungsfluids durch mindestens eine der einen oder mehreren Einlassleitungen (13a, 25a), eine oder mehrere Auslassleitungen (13c, 25c) und eine oder mehrere Zwischenleitungen (13b, 25b), und Mittel zum Übertragen von einströmender Luft (14) durch den Eintrittswärmetauscher (22), wobei die einströmende Luft (14) konfiguriert ist, um in den Eintrittswärmetauscher (22) von der Seite der Auslassleitung (13c) einzutreten, wobei das Luftbehandlungsgerät (20) konfiguriert ist, um die Wärmeübertragungskapazität des Eingangswärmetauschers (22) während eines Abtauzyklus des Luftbehandlungsgeräts (20) zu begrenzen, indem das Wärmeübertragungsfluid über die Zwischenleitung (25b) des Eingangswärmetauschers (22) eintritt und das Wärmeübertragungsfluid über die Auslassleitung (25c) des Eingangswärmetauschers (22) austritt, um die vom Wärmeübertragungsfluid in die einströmende Luft (26) übertragene Wärmemenge zu verringern.

2. Wärmetauscher nach Anspruch 1, wobei das Mittel zum Steuern der Durchflussrate ein Steuerventil (29) umfasst.

3. Wärmetauscher nach Anspruch 1 oder 2, wobei die Mittel zum Steuern der Durchflussrate eine Pumpe (28) umfassen.

4. Verfahren zum Steuern der Wärmeübertragungskapazität des Luftbehandlungsgeräts (20) nach einem der vorstehenden Ansprüche 1 bis 3, wobei das Verfahren Folgendes umfasst:
- Zuführen von einströmender Luft (14) in den Eingangswärmetauscher (22) von der Seite des Auslasskanals (13c, 25c),
- Zirkulieren desselben Wärmeübertragungsfluids sowohl über den mindestens einen Eintrittswärmetauscher (22) als auch über den mindestens einen Austrittswärmetauscher (23),
- Übertragen von Wärme aus der Abluft (27) in das Wärmeübertragungsfluid durch den mindestens einen Austrittswärmetauscher (23);
- Übertragen von Wärme aus dem Wärmeträgerfluid an die einströmende Luft (26) durch den mindestens einen Eintrittswärmetauscher (22);
wobei das Verfahren Folgendes umfasst:
- Durchführen eines Abtauzyklus, um die auf einer Oberfläche des Austrittswärmetauschers (23) kondensierte Feuchtigkeit zu entfernen,
wobei der Abtauzyklus Folgendes umfasst:
- Verkleinern eines aktiven Wärmeaustauschbereichs des mindestens einen Eingangswärmetauschers (22), indem das Wärmeübertragungsfluid über die Zwischenleitung (25b) des Eingangswärmetauschers (22) eintritt und das Wärmeübertragungsfluid über die Auslassleitung (25c) des Eingangswärmetauschers (22) austritt, um die vom Wärmeübertragungsfluid in die eintretende Luft (26) übertragene Wärmemenge zu verringern.

5. Wärmetauschersystem (20), umfassend das Luftbehandlungsgerät nach Anspruch 1, Rohrleitungen und eine Pumpe (28), die konfiguriert ist, um Wärmeübertragungsfluid sowohl über den mindestens einen Eintrittswärmetauscher (22) als auch über den mindestens einen Austrittswärmetauscher (23) zu zirkulieren, wobei das Wärmetauschersystem (20) konfiguriert ist, um einen Abtauzyklus durchzuführen, um Feuchtigkeit, die auf einer Oberfläche des Austrittswärmetauschers (23) kondensiert ist, zu entfernen, indem ein aktiver Wärmeaustauschbereich des mindestens einen Eintrittswärmetauschers (22) verringert wird, indem das Wärmeübertragungsfluid über die Zwischenleitung (25b) des Eintrittswärmetauschers (22) eintritt und das Wärmeübertragungsfluid über die Auslassleitung (25c) des Eintrittswärmetauschers (22) austritt, um die Wärmemenge zu verringern, die von dem Wärmeübertragungsfluid in die eintretende Luft (26) übertragen wird.

6. Wärmetauschersystem nach Anspruch 5, wobei das Wärmetauschersystem konfiguriert ist, um in einem Belüftungssystem verwendet zu werden.

## Revendications

1. Appareil de traitement d'air (20) comprenant un échangeur de chaleur d'entrée (22) et un échangeur de chaleur de sortie (23), dans lequel l'échangeur de chaleur d'entrée (22) et l'échangeur de chaleur de sortie (23) sont des échangeurs de chaleur air-fluide comprenant au moins un ou plusieurs conduits (11) configurés pour la circulation du fluide caloporteur, un ou plusieurs conduits d'entrée (13a, 25a), un ou plusieurs conduits de sortie (13c, 25c) et un ou plusieurs conduits intermédiaires (13b, 25b), des moyens (29) pour réguler le débit du fluide caloporteur à travers au moins un desdits un ou plusieurs conduits d'entrée (13a, 25a), un ou plusieurs conduits de sortie (13c, 25c) et un ou plusieurs conduits intermédiaires (13b, 25b), et des moyens pour transférer l'air entrant (14) à travers l'échangeur de chaleur d'entrée (22), dans lequel l'air entrant (14) est configuré pour entrer dans l'échangeur de chaleur d'entrée (22) par le côté du conduit de sortie (13c), dans lequel l'appareil de traitement d'air (20) est configuré pour limiter la capacité de transfert de chaleur de l'échangeur de chaleur d'entrée (22) pendant un cycle de dégivrage de l'appareil de traitement d'air (20) en faisant entrer le fluide caloporteur via le conduit intermédiaire (25b) de l'échangeur de chaleur d'entrée (22) et en faisant sortir le fluide caloporteur via le conduit de sortie (25c) de l'échangeur de chaleur d'entrée (22) pour diminuer la quantité de chaleur transférée du fluide caloporteur à l'air entrant (26).

2. Échangeur de chaleur selon la revendication 1, dans lequel lesdits moyens de régulation dudit débit comprennent une vanne de régulation (29).

3. Échangeur de chaleur selon la revendication 1 ou 2, dans lequel lesdits moyens de régulation dudit débit comprennent une pompe (28).

4. Procédé de commande de la capacité de transfert de chaleur de l'appareil de traitement d'air (20) selon l'une quelconque des revendications 1 à 3 précédentes, dans lequel le procédé comprend :
- le fait de faire entrer de l'air entrant (14) dans l'échangeur de chaleur d'entrée (22) par le côté du conduit de sortie (13c, 25c),
- le fait de faire circuler le même fluide caloporteur via à la fois l'au moins un échangeur de chaleur d'entrée (22) et l'au moins un échangeur de chaleur de sortie (23),
- le transfert de la chaleur de l'air d'échappement (27) dans le fluide caloporteur par l'au moins un échangeur de chaleur de sortie (23) ;
- le transfert de la chaleur du fluide caloporteur à l'air entrant (26) par l'au moins un échangeur de chaleur d'entrée (22) ;
dans lequel le procédé comprend :
- la réalisation d'un cycle de dégivrage pour éliminer l'humidité condensée sur une surface de l'échangeur de chaleur de sortie (23)
dans lequel le cycle de dégivrage comprend :
- la diminution de la surface d'échange de chaleur active de l'au moins un échangeur de chaleur d'entrée (22) en faisant entrer le fluide caloporteur via le conduit intermédiaire (25b) de l'échangeur de chaleur d'entrée (22) et en faisant sortir le fluide caloporteur via le conduit de sortie (25c) de l'échangeur de chaleur d'entrée (22) pour diminuer la quantité de chaleur transférée du fluide caloporteur à l'air entrant (26).

5. Système d'échange de chaleur (20) comprenant l'appareil de traitement d'air selon la revendication 1, une tuyauterie et une pompe (28) configurée pour faire circuler un fluide caloporteur via à la fois l'au moins un échangeur de chaleur d'entrée (22) et l'au moins un échangeur de chaleur de sortie (23), dans lequel le système d'échange de chaleur (20) est configuré pour réaliser un cycle de dégivrage pour éliminer l'humidité condensée sur une surface de l'échangeur de chaleur de sortie (23) en diminuant la surface d'échange de chaleur active de l'au moins un échangeur de chaleur d'entrée (22) en faisant entrer le fluide caloporteur via le conduit intermédiaire (25b) de l'échangeur de chaleur d'entrée (22) et en faisant sortir le fluide caloporteur via le conduit de sortie (25c) de l'échangeur de chaleur d'entrée (22) pour diminuer la quantité de chaleur transférée du fluide caloporteur à l'air entrant (26).

6. Système d'échange de chaleur selon la revendication 5, dans lequel le système d'échange de chaleur est configuré pour être utilisé dans un système de ventilation.
